# EUROPEAN PATENT SPECIFICATION

(11) **EP 0 397 685 B1**
(45) Date of publication and mention of the grant of the patent: **13.03.1996**
(21) Application number: 89900770.2
(22) Date of filing: 08.12.1988
(51) Int. Cl.: H05B 3/02

(54) **LAMINAR ELECTRICAL HEATERS**
LAMINARE ELEKTRISCHE HEIZVORRICHTUNG
RADIATEUR ELECTRIQUE LAMINAIRE

(30) Priority: 08.12.1987 US 130264
(43) Date of publication of application: 22.11.1990
(73) Proprietor: RAYCHEM CORPORATION, Menlo Park California 94025 (US)
(72) Inventor: CLAYPOOL, James, L., Los Altos, CA 94022 (US); KRIDL, Thomas, A., Los Altos, CA 94022 (US); MIDDLEMAN, Lee, M., Portola Valley, CA 94025 (US)
(74) Representative: Jones, David Colin
(86) International application number: US8804380
(87) International publication number: WO8905701

(56) References cited:
- US-A- 4 635 026
- US-A- 4 689 475
- US-A- 4 706 060
- US-A- 4 719 335
- US-A- 4 783 587

## Description

This invention relates to the use of conductive polymers in heaters.

Conductive polymers are well-known for use in electrical devices such as circuit protection devices and heating elements. Such elements, and compositions and processes useful for making such elements, are described in U.S. Patent Nos. 3,179,544, 3,399,451, 3,793,716, 3,858,144, 3,861,029, 3,914,363, 4,017,715, 4,085,286, 4,095,044, 4,135,587, 4,177,376, 4,177,446, 4,223,209, 4,237,441, 4,272,471, 4,304,987, 4,314,230, 4,315,237, 4,318,220, 4,317,027, 4,318,220, 4,327,351, 4,330,703, 4,388,607, 4,421,582, 4,517,449, 4,532,164, 4,543,474, 4,548,662, 4,654,511, 4,689,475, 4,700,054, 4,743,321, and 4,777,351 and in copending commonly assigned U.S. Application Serial Nos. 141,989 published as European Patent Application No. 38,713 (October 28, 1981) and 938,659 published as European Patent Application No. 270,370 (June 8, 1988).

Laminar heating elements are particularly useful for distributing heat uniformly over wide areas either by direct physical and thermal contact or through radiant heating. Devices comprising such heaters are described in U.S. Patent Nos. 4,426,633, and 4,689,475, and in copending commonly assigned U.S. Application Serial Nos. 818,845 and 818,846 both published as European Patent Application No. 231,068 (August 5, 1987), and 913,290 published as European Patent Application No. 268,362 (May 25, 1988).

### SUMMARY OF THE INVENTION

In testing sheet heaters of the kind discussed above, we have discovered that even when the heaters are apparently fully insulated, it is sometimes possible for moisture (or other electrolyte) to gather in voids inadvertently formed between the insulation and the conductive polymer around the periphery of the conductive polymer heating element, and thus to permit arcing between the electrodes, and consequential damage to the heater. We have discovered that the danger of such arcing can be substantially reduced by ensuring that at least one of the electrodes is set back from the periphery of the resistive element, e.g. by trimming back one or both of the electrodes, in the regions where the presence of voids is a possibility, preferably around the whole periphery of the heating element, so as substantially to increase the distance over which an arc between the electrodes must be struck and maintained. An equivalent result can be obtained by securing an insulating element to the resistive element around the periphery thereof in such a way as to eliminate all possibility of a void between the insulating and resistive elements.

In one aspect, the invention provides an electrical heater which comprises
(1) a laminar resistive element (3) which is composed of a conductive polymer and which has a first face and an opposite second face;
(2) a first laminar electrode (1), the whole of which is secured to the second face of the resistive element,; and
(3) a second laminar electrode (2), the whole of which is secured to the second face of the resistive element, and at least a part of which is opposite the first electrode;
the first and second electrodes being connectable to a power supply, whereby current passes between the electrodes in a direction which is substantially at right angles to the faces of the resistive element,
characterized in that there is a continuous marginal portion around the whole of the periphery of the resistive element in which at most one of the first and second electrodes is present.

### BRIEF DESCRIPTION OF THE DRAWINGS

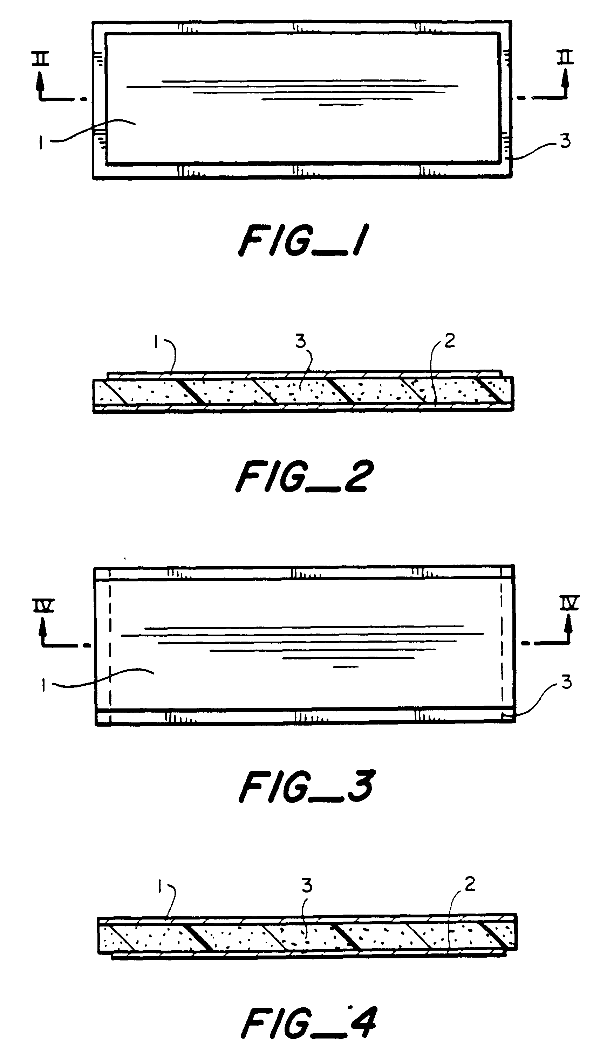

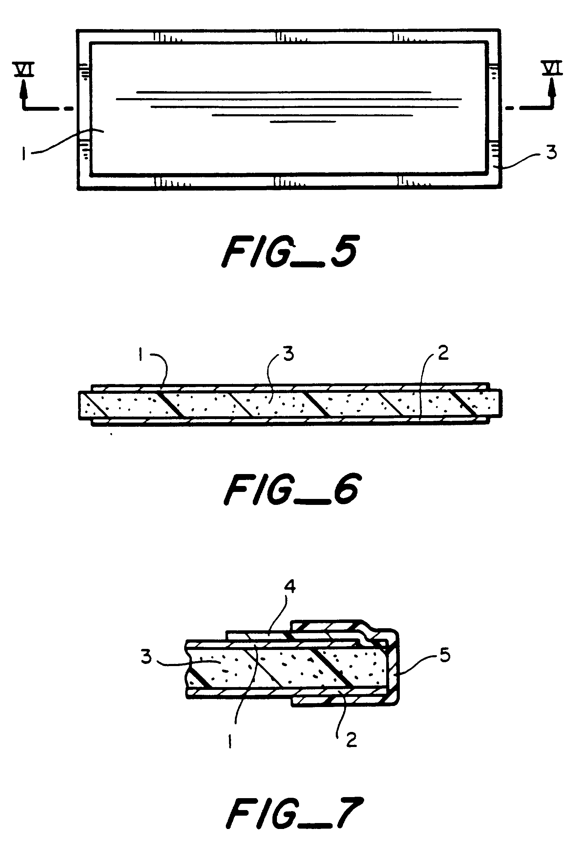

The invention is illustrated in the accompanying drawing in which
Figures 1, 3 and 5 are plan views of a first, second and third heaters of the invention,
Figures 2, 4 and 6 are cross-section on lines II-II, IV-IV and VI-VI of Figures 1, 3 and 5, respectively, and
Figure 7 is a cross-sectional view of a preferred method of insulating the edge of the heater.

### DETAILED DESCRIPTION OF THE INVENTION

Preferred features of the invention are disclosed below. Such features can be used alone, or where appropriate, together in any combination. Thus preferred features of the present invention include:
(a) the first electrode covers substantially all of the first face except for at least a part of said marginal portion, particularly substantially all of the first face except for a first continuous margin around the whole of the perimeter of the first face;
(b) the second electrode covers substantially all of the second face except for at least a part of said marginal portion, particularly substantially all of the second face except for a second continuous margin around the whole of the perimeter of the second face;
(c) the second heater has two straight sides which are parallel to each other, and the first electrode covers the whole of the first face except for (a) two margins which run down the whole length of each of the straight sides, and optionally (b) further margins which run down the whole length of each of the other sides, preferably a heater whose periphery consists of four straight sides, two of which are parallel to each other, e.g. a first pair of sides parallel to each other and a second pair of sides parallel to each other, preferably such a heater in which the first electrode covers the whole of the first face except for two margins which run down the whole length of each of the sides of the first part, and the second electrode covers the whole of the second face except for two margins which run down the whole length of each of the sides of the second pair;
(d) each of the electrodes is a continuous metal foil electrode, especially an electrodeposited metal foil electrode;
(e) at least a part of the marginal portion has been formed by removal of an electrode previously applied to the resistive element;
(f) the resistive element is at most 100 mils thick, preferably at most 50 mils thick; and
(g) the distance between the first and second electrodes around the outside of the resistive element is at least 1.5 times, preferably at least 2 times, particularly at least 3.5 times, the thickness of the resistive element.

Referring now to the drawing, in each of the figures, reference numerals 1 and 2 denote metal foil electrodes and 3 denotes a resistive element composed of a conductive polymer. In Figure 7, numberals 4 and 5 denote insulating tape which is secured to the substrate by an adhesive, and is preferably fused to ensure adequate insulation of the edges. Preferably after application of such tape, and after securing electrical leads to the electrodes, the whole heater is perferably further insulated, e.g. by dipping it into a curable epoxy resin.

### Example

A PTC conductive polymer powder was prepared by mixing 56% by weight of Marlex™ 50100 (high density polyethylene made by Phillips Petroleum), 43% by weight of Statex™ GH (carbon black made by Columbian Chemicals), and 1% by weight of an antioxidant in a Banbury™ mixer. The resulting compound was irradiated to a dose of 50 Mrads in a 3 MeV electron beam and pulverized until all the particles were smaller than 187 micrometers (80 mesh). This PTC powder was tumble-blended with an equal weight of Microthene™ FA750 (high density polyethylene made by USI Chemicals), and the blend was extruded to give a 12 inch by 0.030 inch (30.5 x 0.08 cm) sheet. Using a belt laminator, the sheet was laminated on each side with 0.0014 inch (0.0035 cm) metal foil (nickel/zinc passivated electrodeposited copper foil made by Yates Industries). The laminated sheet was cut into pieces of appropriate size and, using a router, the foil on the top surface was cut through at a distance of 0.1875 inch (0.476 cm) from the edge around the perimeter of the piece. After removing the narrow strip of foil, a piece of 0.75 inch (1.91 cm) wide adhesive-backed mylar tape (electrical tape No. 56 from 3M) was applied to cover the exposed conductive polymer sheet and the edge of the foil. A second piece of tape was applied from the bottom surface foil over the first tape layer to cover the exposed edge of the conductive polymer sheet. The heater was stored at 125°C for one hour to condition the adhesive tape. Electrical leads were attached to the surface of the foil and the entire heater was then spray-coated with epoxy powder (Black Beauty™ ELB-400-P9, available from The Brien Corporation).

## Claims

1. An electrical heater which comprises
(1) a laminar resistive element (3) which is composed of a conductive polymer and which has a first face and an opposite second face;
(2) a first laminar electrode (1), the whole of which is secured to the second face of the resistive element,; and
(3) a second laminar electrode (2), the whole of which is secured to the second face of the resistive element, and at least a part of which is opposite the first electrode;
the first and second electrodes being connectable to a power supply, whereby current passes between the electrodes in a direction which is substantially at right angles to the faces of the resistive element,
characterized in that there is a continuous marginal portion around the whole of the periphery of the resistive element in which at most one of the first and second electrodes is present.

2. A heater according to Claim 1 wherein the first electrode covers substantially all of the first face except for at least a part of said marginal portion.

3. A heater according to Claim 2 wherein the first electrode covers substantially all of the first face except for a first continuous margin around the whole of the perimeter of the first face.

4. A heater according to Claim 2 or 3 wherein the second electrode covers substantially all of the second face except for a second continuous margin around the whole of the perimeter of the second face.

5. A heater according to Claim 1 which has four straight sides, two of which are parallel to each other; and the first electrode covers the whole of the first face except for (a) two margins which run down the whole length of each of the parallel straight sides, and optionally (b) further margins which run down the whole length of each of the other sides.

6. A heater according to Claim 5 wherein the first electrode covers the whole of the first face except for two margins which run down the whole length of each of the parallel sides, and the second electrode covers the whole of the second face except for two margins which run down the whole length of each of the other sides.

7. A heater according to any one of the preceding claims wherein each of the electrodes is a continuous metal foil electrode, preferably comprising an electrodeposited metal.

8. A heater according to any one of the preceding claims wherein at least part of the marginal portion has been formed by removal of an electrode previously applied to the resistive element.

9. A heater according to any one of the preceding claims wherein the resistive element is at most 100 mils (0.254 cm) thick, preferably at most 50 mils (0.127 cm).

10. A heater according to any one of the preceding claims wherein the distance between the first and second electrodes around the outside of the resistive element is at least 1.5 times, preferably at least 2 times, the thickness of the resistive element.

## Patentansprüche

1. Elektrische Heizvorrichtung, die aufweist:
(1) ein laminares Widerstandselement (3), das aus einem leitfähigen Polymer besteht und das eine erste Oberfläche und eine gegenüberliegende zweite Oberfläche hat;
(2) eine erste laminare Elektrode (1) die insgesamt an der zweiten Oberfläche des Widerstandselements befestigt ist; und
(3) eine zweite laminare Elektrode (2), die insgesamt an der zweiten Oberfläche des Widerstandselements befestigt ist und von der wenigstens ein Teil der ersten Elektrode gegenübersteht;
wobei die erste und die zweite Elektrode mit einer Stromversorgung verbindbar sind, so daß Strom zwischen den Elektroden in einer Richtung fließt, die zu den Oberflächen des Widerstandselements im wesentlichen rechtwinklig ist,
dadurch gekennzeichnet, daß um den gesamten Umfang des Widerstandselements herum ein kontinuierlicher Randbereich vorhanden ist, in dem höchstens eine von der ersten und der zweiten Elektrode anwesend ist.

2. Heizvorrichtung nach Anspruch 1, wobei die erste Elektrode im wesentlichen die gesamte erste Oberfläche mit Ausnahme wenigstens eines Teils des Randbereichs bedeckt.

3. Heizvorrichtung nach Anspruch 2, wobei die erste Elektrode im wesentlichen die gesamte erste Oberfläche mit Ausnahme eines ersten kontinuierlichen Rands um den Gesamtumfang der ersten Oberfläche herum bedeckt.

4. Heizvorrichtung nach Anspruch 2 oder 3, wobei die zweite Elektrode im wesentlichen die gesamte zweite Oberfläche mit Ausnahme eines zweiten kontinuierlichen Rands um den Gesamtumfang der zweiten Oberfläche herum bedeckt.

5. Heizvorrichtung nach Anspruch 1, die vier gerade Seiten hat, von denen zwei parallel zueinander sind; und wobei die erste Elektrode die gesamte erste Oberfläche bedeckt, mit Ausnahme von (a) zwei Rändern, die die gesamte Länge jeder der parallelen geraden Seiten entlang verlaufen, und fakultativ (b) weiteren Rändern, die die gesamte Länge jeder der anderen Seiten entlang verlaufen.

6. Heizvorrichtung nach Anspruch 5, wobei die erste Elektrode die gesamte erste Oberfläche bedeckt, mit Ausnahme von zwei Rändern, die die gesamte Länge jeder der parallelen Seiten entlang verlaufen, und die zweite Elektrode die gesamte zweite Oberfläche bedeckt, mit Ausnahme von zwei Rändern, die die gesamte Länge jeder der anderen Seiten entlang verlaufen.

7. Heizvorrichtung nach einem der vorhergehenden Ansprüche, wobei jede der Elektroden eine kontinuierliche Metallfolienelektrode ist, die bevorzugt ein galvanisch abgeschiedenes Metall aufweist.

8. Heizvorrichtung nach einem der vorhergehenden Ansprüche, wobei wenigstens ein Teil des Randbereichs durch Entfernen einer vorher auf das Widerstandselement aufgebrachten Elektrode gebildet worden ist.

9. Heizvorrichtung nach einem der vorhergehenden Ansprüche, wobei das Widerstandselement höchstens 0,254 cm (100 mils), bevorzugt höchstens 0,127 cm (50 mils), dick ist.

10. Heizvorrichtung nach einem der vorhergehenden Ansprüche, wobei der Abstand zwischen der ersten und der zweiten Elektrode um die Außenseite des Widerstandselements herum wenigstens das 1,5 fache, bevorzugt wenigstens das 2fache, der Dicke des Widerstandselements beträgt.

## Revendications

1. Dispositif chauffant électrique qui comporte
(1) un élément résistif laminaire (3) qui est composé d'un polymère conducteur et qui présente une première face et une seconde face opposée ;
(2) une première électrode laminaire (1) dont la totalité est fixée à la seconde face de l'élément résistif ; et
(3) une seconde électrode laminaire (2) dont la totalité est fixée à la seconde face de l'élément résistif et dont au moins une partie est opposée à la première électrode ;
les première et seconde électrodes pouvant être connectées à une alimentation en énergie, grâce à quoi un courant passe entre les électrodes dans une direction qui est sensiblement à angle droit avec les faces de l'élément résistif,
caractérisé en ce qu'il y a une portion marginale continue le long de la totalité de la périphérie de l'élément résistif, dans laquelle au maximum l'une des première et seconde électrodes est présente.

2. Dispositif chauffant selon la revendication 1, dans lequel la première électrode couvre sensiblement la totalité de la première face à l'exception d'au moins une partie de ladite portion marginale.

3. Dispositif chauffant selon la revendication 2, dans lequel la première électrode couvre sensiblement la totalité de la première face à l'exception d'une première marge continue s'étendant sur la totalité du périmètre de la première face.

4. Dispositif chauffant selon la revendication 2 ou 3, dans lequel la seconde électrode couvre sensiblement la totalité de la seconde face à l'exception d'une seconde marge continue suivant la totalité du périmètre de la seconde face.

5. Dispositif chauffant selon la revendication 1, qui comporte quatre côtés droits, dont deux sont parallèles entre eux ; et la première électrode couvre la totalité de la première face à l'exception (a) de deux marges qui s'étendent sur toute la longueur de chacun des côtés droits parallèles, et optionnellement (b) d'autres marges qui s'étendent sur toute la longueur de chacun des autres côtés.

6. Dispositif chauffant selon la revendication 5, dans lequel la première électrode couvre la totalité de la première face à l'exception de deux marges qui s'étendent sur toute la longueur de chacun des côtés parallèles, et la seconde électrode couvre la totalité de la seconde face à l'exception de deux marges qui s'étendent sur toute la longueur de chacun des autres cotés.

7. Dispositif chauffant selon l'une quelconque des revendications précédentes, dans lequel chacune des électrodes est une électrode à mince feuille métallique continue, comprenant avantageusement un métal électrodéposé.

8. Dispositif chauffant selon l'une quelconque des revendications précédentes, dans lequel au moins une partie de la portion marginale a été formée par enlèvement d'une électrode précédemment appliquée sur l'élément résistif.

9. Dispositif chauffant selon l'une quelconque des revendications précédentes, dans lequel l'élément résistif a au maximum une épaisseur de 100 mils (0,254 cm), avantageusement au maximum 50 mils (0,127 cm).

10. Dispositif chauffant selon l'une quelconque des revendications précédentes, dans lequel la distance entre les première et seconde électrodes le long du côté extérieur de l'élément résistif est d'au moins 1,5 fois, avantageusement d'au moins deux fois, l'épaisseur de l'élément résistif.
